# EUROPEAN PATENT SPECIFICATION

(11) **EP 2 875 924 B1**
(45) Date of publication and mention of the grant of the patent: **19.04.2017**
(21) Application number: 13194476.1
(22) Date of filing: 26.11.2013
(51) Int. Cl.: B27N 3/10, C04B 28/00, C04B 41/50, D21J 1/08, E04C 2/10, C04B 20/10, C04B 111/00

(54) **Wood-based panels, method for manufacturing them and their use**
Platten auf Holzbasis, Verfahren zu deren Herstellung und deren Verwendung
Panneaux en matériaux dérivés du bois, méthode pour leur production, et leur utilisation

(43) Date of publication of application: 27.05.2015
(73) Proprietor: SWISS KRONO Tec AG, 6004 Luzern (CH)
(72) Inventor: Dr. Welling, Johannes, 21465 Reinbek (DE); Dr. Shalbafan, Ali, Noor City, Mazandaran Province 46417-76489 (IR)
(74) Representative: Maikowski & Ninnemann Patentanwälte Partnerschaft mbB

(56) References cited:
- WO-A1-86/01766
- DE-A1- 2 636 313
- US-A1- 2008 185 749
- US-A1- 2012 237 784
- AL BAKRI A M M ET AL: "Feasibility of producing wood fibre-reinforced geopolymer composites (WFRGC)", ADVANCED MATERIALS RESEARCH; ADVANCED MATERIALS ENGINEERING AND TECHNOLOGY : SELECTED, PEER REVIEWED PAPERS FROM THE 2012 INTERNATIONAL CONFERENCE ON ADVANCED MATERIALS ENGINEERING AND TECHNOLOGY (ICAMET 2012), TRANS TECH PUBLICATIONS LTD, CH; PENANG, vol. 626, 1 January 2012 (2012-01-01), pages 918-925, XP008168802, ISSN: 1022-6680, DOI: 10.4028/WWW.SCIENTIFIC.NET/AMR.626.918 [retrieved on 2012-12-01]

## Description

The invention relates to a process for the preparation of a wood-based panel comprising the steps of resinating wooden lamella, veneers, strands, particles, powders and fibers with a mineral binder and the subsequent manufacturing process of wood-based panels.

About 6 million m³ particleboards (PB), 4 million m³ Medium Density Fiber Boards (MDF)/High Density Fiber Boards (HDF), 1.5 million m³ Oriented Strand Boards (OSB) as well as several further highly specialized wood-based construction materials are produced annually in Germany. Presently, for the production of these wood-based materials, there are mainly used binders based on fossil organic carbon sources, such as oil, gas, coal and recently also renewable raw materials. These fossil organic carbon sources are not only used as chemical raw materials, they are still the most important energy carriers. The prices for these organic binders have increased continuously over the last years because of the continuous increase of the costs for the fossil energy carriers. Currently, the prices for the binders contribute about 30-40% to the costs of the wood materials and thus, the prices for the wood-based panel products are directly connected to the fluctuating market prices for the fossil energy carriers.

Different products can be produced with wooden strands and/or particles. Such wood-based panel products are for example particleboard (PB), fiberboard (FB) and structural panels like oriented strand lumber (OSL), parallel strand lumber (PSL), laminated strand lumber (LSL) and oriented strand board (OSB).

Oriented strand board (OSB) for example is an engineered, mat-formed board manufactured from strands, flakes or wafers sliced from small diameter round wood logs and bonded with suitable binder under heat and pressure.
Oriented strand board consists of several layers of strands also known as a mat of strands. The exterior or face layers are formed of strands aligned in the longer board direction and typically represent approximately 55% of the total board weight. Inner or core layers consist of cross or randomly aligned strands and represent the balance of about 45% of the weight of the board. Once the mat has been formed e.g. all the layers have been put together, it is subjected to intense heat and pressure to become a master board and is subsequently cut to size.
The strength of oriented strand boards comes mainly from the uninterrupted wood fiber, the interweaving of the long strands and the degree of orientation of the strands. Suitable resin binders are combined with the strands to provide the desired mechanical board properties and moisture resistance.
The oriented strand boards that are commercially prepared at the moment comprise a core layer of wood strands combined with an adhesive composition, covered by two face layers of wood strands combined with another adhesive composition. The strands in the OSB typically have the following dimensions; length between 5 and 150 mm, width between 1 and 50 mm and thickness between 0.1 and 2 mm. The core can form between 10 and 90 wt. % of the OSB, preferably between 40 and 70% of the OSB. The adhesive composition in core layer of the known OSB comprises 2-8 wt% (dry resin/dry wood) of a polymeric methylene diphenyl diisocyanate (pMDI) or a phenol formaldehyde (PF) resin. The adhesive composition in the face layers comprises a melamine-urea-formalydehyde (MUF) resin, and may also comprise a small amount of phenol or a phenol formaldehyde resin or pMDI resin with a release agent added thereto. The face layers have a resin content of typically 9-12 wt % dry resin/dry wood for MUF and typically 2-6 wt% dry resin/dry wood for PF. As is common practices, the adhesives in a prepared OSB are at least partially cured, preferably fully cured. It is a disadvantage of the known OSB's that a relatively high amount of resin based on organic carbon sources is necessary, in particular in the face layers, in order to ensure that the quality standard requirements are met.

The manufacture of compression molded composites from a mixture of wood chips or fibers and a polyisocyanate binder is well known. Isocyanate binders are excellent adhesives for the wood chips or fibers, but they require the use of high press temperatures during the manufacture of composite boards from these lignocellulosic particulate substrates. Press temperatures of greater than 200 °C, often as high as 220 °C or even higher, are often needed in order to achieve an effective cure of the adhesive in a reasonable period of time. There is a trade off between press temperature and residence time in the press. Lower press temperatures generally equate to longer residence times. Longer residence times are undesirable in industry because these reduce the throughput of the manufacturing process. High press temperatures require more energy and often cause undesirable amounts of VOC (volatile organic compounds) emissions from the substrate during pressing. In addition, the high temperatures often cause thermal damage to the composite boards, and, in some circumstances, even fires in the press. The high heat requirements tend to drive the moisture content of the end product (board) to undesirably low levels.

For many years fibreboard products have been manufactured from wood or agricultural substrates using various adhesives. Formaldehyde-based resins such as phenol formaldehyde (PF), urea formaldehyde (UF) and melamine formaldehyde (MF) are extremely common and used for a variety of purposes such as manufacturing of housing and furniture panels such as medium density fiberboard (MDF), oriented strand board (OSB), plywood, and particleboard (PB). Concerns about the toxicity of formaldehyde have led regulatory authorities to mandate the reduction of formaldehyde emissions.

The use of mineral binders is already known in the art. Cement-bonded particle boards and fiber boards as well as gypsum-bonded fiber boards are in use for decades, but were replaced in the recent years by MDI (methylene diphenyl diisocyanate)-bonded weather-resistant wood materials. The methods that have been used previously for the production of mineral-bonded wood composites are based on the formation of crystal structures (mineralization) in connection with the intercalation of constitution water. The subsequent curing is relatively slow at low temperatures. The excess water must be expelled after curing of the produced panels, which is a highly energy consuming process.

Geopolymer materials (also known as alkali-activated aluminosilicate materials and/or mineral polymer) are inorganic polymers synthesized by reaction of a strongly alkaline silicate solution and an aluminosilicate source at near-ambient temperature. The reaction gives rise to a material that exhibits rapid setting and hardening characteristics. Geopolymers have been investigated for use in a number of applications, including the use as novel cementing systems within the construction industry, as refractory materials and as encapsulants for hazardous and radioactive waste streams. Structural characterization of geopolymers reveals that these materials do not exhibit long range order and are thus X-ray amorphous. They are based on an aluminosilicate framework in which the aluminium is mainly in tetrahedral coordination and silicon has a variety of coordination geometries. A cation, commonly sodium or potassium, provides charge balance. The structural units include sialate [-Si-O-Al-O-], sialate siloxo [-Si-O-Al-O-Si-O-] and sialate disiloxo [-Si-O-AI-O-Si-O-Si-O-].

AL BAKRI A.M.M et al in "Feasibility of producing wood fibre-reinforced geopolymer composites (WFRGC)" in ADVANCED MATERIALS RESEARCH; ADVANCED MATERIALS ENGINEERING AND TECHNOLOGY : SELECTED, PEER REVIEWED PAPERS FROM THE 2012 INTERNATIONAL CONFERENCE ON ADVANCED MATERIALS ENGINEERING AND TECHNOLOGY (ICAMET 2012), TRANS TECH PUBLICATIONS LTD, CH; PENANG, vol. 626, 1 January 2012 (2012-01-01), pages 918-925 are disclosing a composition for manufacturing a composite body comprising a geopolymer binder and wood fibres wereby the geopolymer binder comprises waterglass, selected from sodium silicate, a chemical base (NaOH), water and at least one aluminosilicate, selected from fly ash. The alkaline activator is first diluted to obtain a 12M concentration, sodium silicate is added, fly ash is added and wood fibers are added. DE2636313A1 discloses a panel made from a composition comprising a mineral binder and wood fibres. In examples 3, 6 and 8 a composition is disclosed which comprises waterglass, selected from sodium silicate, a chemical base (NaOH), water and wood shavings, whereby by the wood shaving are resinated within the mixture, by mixing (examples 3 and 8) and spraying (example 6). The composition of example 1 is shaped into panels and moulded under application of heat in a hot press at 175°C. The panel has a density of 714 kg/m3. WO 86/01766 A1 discloses a fire-resistant wood composite made from a composition comprising a mineral binder and wood fibres. In examples 1-4 mineral binder compositions are disclosed which comprise waterglass, selected from sodium waterglass, a chemical base (NaOH), water, at least one aluminosilicate, selected from finely-ground blast-furnace slag and wood particles such as wood chips, wood fibres, sawdust, woodwool, etc. are mixed with the mineral binder composition and manufactured into boards. The compositions are deposited as layers onto conveyor belt of plates and are finally pressed at 135-140°C. The boards have densities of approximately 1200 kg/m3. US2012/237784A1 discloses an inorganic board made from a composition comprising a mineral binder, an aggregating agent chosen from polyallylamine, aniline resins, etc. and 1-30 wt.-% wood reinforcing fibres. The wooden material is covered with the aggregating agent and the latter is covered with the aluminosilicate binder. The mineral binder composition comprises waterglass, selected from sodium silicate, a chemical base (KOH), water, at least one aluminosilicate, selected from fly ash and wood particles. The wood particles are spread on a formboard in a mold and are first mixed with the aggregating agent and then with the mineral binder components. The mixture is cured in the mold at 80°C followed by autoclaving at 160°C. US2008/185749A1 discloses a lightweight composite panel including a non-woven fibrous batting comprising more than 50 wt.-% of synthetic fibres and a geopolymer disposed on or within the fibrous batt to impart rigidity. The mineral binder composition is a geopolymeric precursor solution comprising waterglass, selected from potassium or sodium silicate, a chemical base (KOH), water and at least one aluminosilicate, selected from metakaolin. The geopolymer precursor solution is either coated or impregnated onto the non-woven fibrous batting either on one or both sides of the non-woven fibrous batt to contact regions of the batting. This might be done by any application technique known in the art: immersion, flip coating, slot coating, spraying, etc.

Much interest has centered on the types of aluminosilicate sources that can be used successfully in the geopolymerisation reaction. Naturally occurring minerals including clays and pumice as well as industrial wastes such as fly ash and slag have been investigated. There is considerable advantage in being able to utilize the latter types of waste materials and much effort has been put into developing geopolymers synthesized from the fly ash obtained as a by-product of coal combustion.

Technical problems in the manufacturing of wood-based materials using conventional mineral binders are largely solved. However, its high weight and the water contained in the boards at the time of manufacture are the main problems in the production of mineral-bonded wood-based materials. The use of high temperatures for drying the panels and for shortening the drying time is not suitable, because not only the excess water, but also the constitution water would be expelled from the crystal structures, which would ultimately lead to a loss of strength of the panels.

It is thus an objective of the present invention to overcome the disadvantages of the conventional organic and/or mineral binders used in the production of wood-based panels.

### Description of the invention

The objective of the invention is achieved by a process according to claim 1, comprising the use of a mineral binder composition, which is named geopolymer and which is suitable for use as a mineral binder for wood-based panels. Geopolymers are known in the art for a long time. However, their use has not been described and tested for the production of binders for wood-based panels previously.

Geopolymer is a binder produced by the activation of the aluminosilicate powder materials with the alkaline solution. Non-flammability and non-combustibility are the two major important criteria of this type of binder. The reaction of the binder involves the leaching of the SiO₄ and AlO₄ due to the high alkaline solution resulting from the sodium or potassium hydroxide and sodium or potassium silicate. By the removal of water, the tetrahedral SiO₄ and AlO₄ are linked together and form a new precursor of polymer. The variable composition of materials used to produce the binder can significantly affect the final geopolymer characteristic. It was one object of the present invention to investigate the suitability of these types of binders for producing different types of wood-based panels (PB, MDF, OSB, etc.) which have not yet been tested so far and also to characterize the panel properties.

When using the mineral binder composition according to the invention, high temperatures, which are applied during the pressing operation, affect the hardening of the mineral binder positively. Due to the special nature of the chemical reaction during the curing, there is no typical crystal structure with intercalation of constitution water found. In contrast, a kind of mineral polymer is formed instead. In previously produced mineral-bonded wood-based materials, wood has been rather used as filler and for structural improvement. The mineral-bonded panels had a density of 1000-1500 kg/m³ compared to conventional wood-based materials (550-850 kg/m³) and thus were of a high weight. By using the mineral binder composition and the processes of the invention, the density of mineral-bonded wood-based panels can be reduced. Suitably, the density of mineral-bonded wood-based panels can be reduced to the range of 550-1300 kg/m³. Preferably, the density of mineral-bonded wood-based panels can be reduced to the range of 550-1150 kg/m³, more preferably to the range of 550-1000 kg/m³. Most preferably, the density of mineral-bonded wood-based panels can be reduced to that of the conventionally produced panels, i.e. (550-850 kg/m³). In an even most preferred embodiment, the density of mineral-bonded wood-based panels can be reduced to the range of (550-650 kg/m³).

The process for the production of the mineral binder composition can be generally described as follows: At least 1 component of mineral origin is mixed in powder form with a liquid reaction initiator. This results in a sprayable viscose mixture that can be sprayed on wooden lamella, veneers, strands, particles, powders and fibers using similar established processes like for conventional binders to be used in the manufacturing of wood-based panels. The wooden lamella, veneers, strands, particles, powders and fibers are thereby resinated with the mineral binder composition according to the invention. The so-glued wooden particles are only slightly moistened, which is a major advantage of the process according to the present invention. The resinated (i.e. glued) wooden particles can then be spread in conventional scattering devices to form a mat which can be pressed to obtain mineral-bond wood-based materials using a conventional hot press.

"Resination" in the context of the present invention means the treatment of wooden particles, such as lamella, veneers, strands, powders and fibers, with the mineral binder of the invention. Treatment is preferably performed by means of spraying.

"Resinated wooden particles" are wooden particles, such as lamella, veneers, strands, powders and fibers, which have been treated with the mineral binder of the invention, preferably by means of spraying.

Alternative binders, that are independent from the prices for oil and gas, would relieve the wood products industry, the production costs for wood products would be stabilized and the use of wood in this field could be secured in the long run.

The special characteristics of the mineral binder composition have to be taken into account during the pressing process. This may result in specific pressing processes, which are to be adapted to the kind of mineral binder used, wherein said specific pressing processes are characterized by temperature and pressure variations over time in the hot press. Compared to the mineral binders previously used, the major advantage of the binder compositions of the invention is that the water content in the sprayable binder is so low that drying after the curing in the hot press can be largely avoided.

The mineral binder comprises different materials which can be categorized in 4 groups: Group A, Group B, Group C and Group D.
Group A:
   The materials named "Water Glass or Liquid Glass" belong to this group. Sodium silicate (Na₂SiO₃) potassium silicate (K₂SiO₃), lithium silicate (Li₂SiO₃) and/or a mixture between them are used as the materials in group A.
Group B: The materials named "Chemical base" belong to this group. Suitable materials of this group are for example NaOH, NaAl₂O₃, Na₂CO₃, Na₂SO₄, Na₂SO₄, KOH, KAl₂(OH)₃, and Ca(OH)₂. In a preferred embodiment of the invention, sodium hydroxide (NaOH) and potassium hydroxide (KOH) and/or a mixture between them are used as the materials group B.
Group C:
   Only water or distillated water is comprised in this group. Water is used for controlling the final solid content of the binder and for making a solution/emulsion of other components.
Group D:
   The materials named "aluminosilicate powder" having aluminum and silicium as the major components e. g. slag micro-powder, fly ash, paper sludge ash, silica fume, kaolin based minerals (e.g. metakaolin), calcium silicate minerals, calcium aluminate based minerals, plasticized and crushed clay, oil shale ash and/or a mixture of these materials with different ratio between them are materials categorized in this group.

Optionally, the mineral binders may be used in combination with additional materials in order to further modify or adapt the binder performances and properties. Such additional materials are conventional materials that are presently used in the wood industry to produce wood-based panels and may be selected from conventional binders and additives to improve the binder performances.

Suitable conventional binders are for example urea formaldehyde, phenol formaldehyde, melamine formaldehyde, melamine urea formaldehyde, methylene diphenyl diisocyanate (MDI) and polymeric MDI and tannin based materials.

Suitable additives to improve the binder performances are for example organic and/or inorganic materials like polyvinyl alcohol, polyethylene glycol, polyacrylic acid, sodium polyacrylic acid, polyvinyl butyral, polystyrene-co-maleic anhydride, dextran, gelatin and carboxy methyl cellulose, water-based latex, ethyl ester silicate, silanes, epoxides, different types of water repellents and hardeners used for group A materials, different types of buffering materials (for controlling the pH value of the binder) and different types of lignin (e.g. organosolv lignin, amino lignin etc.).

These materials may be added either directly to the final binder mixture or dissolved firstly in the water and then added at any time of the binder preparation or sprayed onto the wooden particles before, during or after the geopolymer binder has been applied to the particles.

In a preferred embodiment of the mineral binder composition used in the present invention, at least one material from Group B is dissolved in water (Group C), at least one material from Group A is added and further, at least one material from Group D is added to this solution.

Optionally, at least one additional material as listed above may be added to the solutions in order to further modify or adapt the binder performances and properties.

Depending on the type and amount of the materials to be used for mineral binder preparation (from the group A, B, C and D), different weight ratios between the materials can be applied which significantly influences the binder performances.

In the group A the weight ratio of the SiO₂/Na₂O or SiO₂/K₂O or SiO₂/Li₂O and/or a mixture between them may be varied in the range of 0.1-5, preferably 1 - 4.5, more preferably 1.5 - 4, or 2 - 3.5, most preferably 2.5 - 3.3.

The weight ratio of the solid part of the water glass (SiO₂ + Na₂O or SiO₂ + K₂O or SiO₂ + Li₂O) to the sodium hydroxide and/or potassium hydroxide can be varied between 0.1-2 preferably between 0.5 - 1.66, more preferably between 0.66 - 1.5, most preferably between 0.83 - 1.33.

The ratio of the alkaline solution (group A + group B + group C) to the aluminosilicate powder (group D) can be varied in the range of 0.51-2, preferably in the range of 0.66 - 1.8, more preferably in the range of 0.83 - 1.6, most preferably in the range of 1 - 1.33.

The final solid content of the mineral binder composition can be varied in the range of 40- 85 mass% (w/w), preferably in the range of 45-80 % (w/w), more preferably in the range of 50-75 % (w/w), most preferably in the range of 55-70 % (w/w).

The ratio of the Si/Al (silicium/aluminium) in the final mineral binder composition may be varied in the range of 1/1 < Si/Al < 50/1. Preferred ranges of the ratio of Si/Al (silicium/aluminium) in the final mineral binder formulation according to invention are for example 1 /1, 3/1, 5/1, 10/1, 15/1, 20/1, 25/1, 30/1, 35/1, 40/1 and 45/1.

A general method for preparing the mineral binder can be described as follows: Sodium hydroxide and/or potassium hydroxide are firstly dissolved in water. The amount of water is depending on the final binder solid content. Right after dissolution of NaOH and/or KOH, the appropriate amount of water glass according to the recipe is added and mixed into the aqueous solution. This mixture should be cooled down to around 15 - 40 °C (ambient temperature) due to the exothermic reaction of the dissolution of NaOH and/or /KOH in the water.

Aluminosilicate powder (group D) is gradually added to the prepared alkaline solution (activator solution) and blended with a mixer. The blending is done until the complete mixing of the ingredients has been achieved. The weight ratio of all ingredients is depending on the desired application of the binder and the allowed ranges are as mentioned above.

Depending on the desired characteristics of the binder and/or for a better workability, the additional materials mentioned above may be added during the preparation of the binder.

According to the present invention, the mineral binder composition is used in the manufacturing of wood-based panels. A general manufacturing process of wood-based panels using the mineral binder of the invention can be described as follows: The prepared mineral binder is applied onto the wood particles, fibers, strands, dust or any other woody or lignocelluloses materials or agriculture residues used in the wood-based panels industries. Preferably, the application of the prepared mineral binder is performed in a mixing unit by means of spraying, preferably onto a continuous stream of particles in a mix unit where the individual particles are mixed by mechanical stirring or in turbulent gas flows. The so-glued wooden particles are only slightly moistened, which is a major advantage of the manufacturing process according to the present invention compared to the conventional methods for making mineral-bonded boards.

The wood material, which is resinated with the mineral binder, is then formed in one or more layers, optionally resinated again with the same or with different percentages of geopolymer binder of the invention, and hot pressed by a single opening, multi opening or in a continuous or cylindrical press. The mineral binder of the invention can be comprised either in the whole panels system, i.e. in all layers of the panels, or alternatively in at least one separate layer of the panels, which may further comprise at least one additional material like a conventional binder, such as urea formaldehyde, phenol formaldehyde, melamine formaldehyde, melamine urea formaldehyde, methylene diphenyl diisocyanate (MDI) or polymeric MDI or a tannin based material and/or an additive selected from organic and/or inorganic materials like polyvinyl alcohol, polyethylene glycol, polyacrylic acid, sodium polyacrylic acid, polyvinyl butyral, polystyrene-co-maleic anhydride, dextran, gelatin and carboxy methyl cellulose, water-based latex, ethyl ester silicate, silanes, epoxides, different types of water repellents and hardeners, different types of buffering materials and/or different types of lignin (e.g. organosolv lignin, amino lignin etc.).

The press temperature used for making the panels can be varied between 81- 220 °C. Suitably, additional processes may be applied to the pressed panels, which improve the properties of the panels and/or performance of the mineral binder of the invention. Such additional processes are for example a hot stacking or the storing the panels in a hot chamber with a temperature ranging from 30 °C - 150 °C for a desired time.

A particular process for the manufacturing of a wood-based panel according to the invention comprises the following steps:
a) resinating wooden particles with at least one mineral binder of the invention, preferably by means of spraying;
b) providing at least one layer of wooden particles,
c) compacting the scattered particles/mineral binder mat in a press, preferably a hot press,
d) optionally hardening/curing of the flat pressed wooden particles/mineral binder composite panels by means of heat, e.g. in a press,
e) optionally post curing and stabilization of the wooden particle/mineral binder composite boards, e.g. by storage in a cooling star, in a hot chamber or in a hot stacking process.

The cohesion of the wooden particles in the manufacturing process of wood-based panels is suitably achieved by means of the mineral binder of the invention.

The wooden particles, which form the matrix material of the wood-based panels, are preferably capable of crushing and are, e.g. selected from lamella, veneers, strands, particles, powders and fibers and any other suitable wooden materials.

The weight ratio of the mineral binder used in the wood-based panels is preferably in the range of 15 - 30 % of mineral binder based on the dry mass of the wood.

In a preferred embodiment of the invention, there is an alkali activator used for activating the mineral binder in the manufacturing process for the wood-based panels. More preferably, sodium hydroxide (NaOH) and/or or potassium hydroxide (KOH) are used as alkali activator in the manufacturing process.

Accordingly, the invention provides a process for the manufacturing of a wood-based panel comprising the following steps:
a) resinating wooden particles with a mineral binder composition by means of spraying,
b) providing at least one layer of the resinated wooden particles,
c) compacting the scattered particles/mineral binder mat in a hot press at an press temperature in the range of 81 to 220 °C,
d) optionally hardening/curing of the flat pressed wooden particles/mineral binder composite panels by means of heat,
e) further optionally post curing and stabilization of the wooden particle/mineral binder composite boards,
wherein the mineral binder composition utilized in step a) comprises
at least one water glass material selected from Sodium silicate (Na2SiO3) potassium silicate (K2SiO3), lithium silicate (Li2SiO3) and/or a mixture thereof,
at least one chemical base, preferably selected from sodium hydroxide (NaOH) and potassium hydroxide (KOH) and/or a mixture thereof,
water or distillated water,
at last one aluminosilicate powder having aluminum and silicium as the major components, preferably selected from slag micro-powder, fly ash, paper sludge ash, silica fume, kaolin based minerals (e.g. metakaolin), calcium silicate minerals, calcium aluminate based minerals, plasticized and crushed clay, oil shale ash and/or a mixture of these materials;
and wherein
- the final solid content of the mineral binder composition is varied in the range of 40-85 % (w/w); and
- the weight ratio of the mineral binder composition is in the range of 10 to 30 % based on the dry mass of the wooden materials.

The wood-based panel used in the process of the invention consists of at least one layer, preferably of two, three or more layers, wherein the mineral binder may preferably be comprised in the whole wood-based panel. In a further preferred embodiment, the mineral binder is comprised in at least one separate layer of the wood-based panel and wherein at least one other material may be comprised in at least one other layer.

The process of the invention suitable for the manufacturing of any kind of wood-based panels, in particular wooden fiber boards, particle boards or oriented strand boards (OSB), preferably oriented strand boards (OSB), medium density fiberboards (MDF) or high density fiberboard (HDF).

The process of the invention can be performed as a batch process or in a continuous manner. In a preferred embodiment, the process of the invention is designed in a manner that the wood-based panels are produced as endless panels. In order to achieve the production of endless panels, the step of compacting the scattered particles/mineral binder mats is performed using a continuously working press, e.g. a press having two continuously moving press plates. Said press is preferably a hot press. If endless panels are produced, the process of the invention suitably comprises the further step of cutting the endless panel into wood-based boards of fixed dimensions, e.g. fixed length and/or width.

The present invention further relates to a wood-based panel, which is obtainable by the manufacturing process according to the invention.

In another embodiment, the present invention provides a wood-based panel comprising wooden particles as matrix material and a mineral binder, which comprises:
at least one water glass material selected from Sodium silicate (Na₂SiO₃), potassium silicate (K₂SiO₃), lithium silicate (Li₂SiO₃) and/or a mixture thereof;
at least one chemical base, preferably selected from sodium hydroxide (NaOH) and potassium hydroxide (KOH) and/or a mixture thereof,
water or distillated water, and
at last one aluminosilicate powder having aluminum and silicium as the major components, preferably selected from slag micro-powder, fly ash, paper sludge ash, silica fume, kaolin based minerals (e.g. metakaolin), calcium silicate minerals, calcium aluminate based minerals, plasticized and crushed clay, oil shale ash and/or a mixture of these materials,
wherein the cohesion of wooden particles is achieved by the mineral binder.

Optionally, the mineral binder in the wood-based panels may further comprise at least one additional material like a conventional binder, such us urea formaldehyde, phenol formaldehyde, melamine formaldehyde, melamine urea formaldehyde, methylene diphenyl diisocyanate (MDI) or polymeric MDI or a tannin based material and/or an additive selected from organic and/or inorganic materials like polyvinyl alcohol, polyethylene glycol, polyacrylic acid, sodium polyacrylic acid, polyvinyl butyral, polystyrene-co-maleic anhydride, dextran, gelatin and carboxy methyl cellulose, water-based latex, ethyl ester silicate, silanes, epoxides, different types of water repellents and hardeners, different types of buffering materials and/or different types of lignin (e.g. organosolv lignin, amino lignin etc.).

The wood-based panel, which comprises the mineral binder, may be any kind of wood-based panels, preferably a wooden fiber board, particle board or an oriented strand board (OSB), plywood or different types of engineered wood products e.g. laminated veneer lumber (LVL), cross-laminated timber (CLT), glue laminated timber (GLT) etc, more preferably an oriented strand board (OSB), medium density fiberboard (MDF) or high density fiberboard (HDF),..

The wood-based panels comprising the mineral binder are suitably further used for the production of any kind of constructing materials, especially for architectural, automotive and furniture applications for interior or exterior applications.
For interior applications, the wood-based panels comprising the mineral are used for the manufacturing of, for example partitioning industrial walls for sound and fire, fire resistance doors, built-in furniture, glue laminated structural members, flooring in greenhouses etc..
For exterior applications, the wood-based panels comprising the mineral binder are used for the manufacturing of, for example, prefabricated housing and as cladding, balcony, floor units, roofs, ceilings, basements, sound barriers, garden and fence wall, fire barriers etc..

The invention will be further explained with reference to the working examples following hereafter.

### Examples

### Example 1: Formulation of the mineral binder

NaOH or KOH was firstly dissolved in water. Right after dissolution of the NaOH or KOH, the appropriate amount of water glass according to the recipe is added and mixed into the aqueous solution. This mixture was cooled down to room temperature °C due to the exothermic reaction of the dissolution of NaOH or KOH in the water. Thereafter, aluminosilicate powder was gradually added to this prepared alkaline solution and blended with a mixer until the complete mixing of the ingredients has been achieved. The mixing time varied between 1 min. and 60 min., depending on the type and amount of aluminosilicate powder used.

The following formulations of the mineral binder have been prepared exemplary:
Formulation A

| **Component** | **Weight ratio** |
|---|---|
| SiO₂/Na₂O | 3.3 |
| (SiO₂ + Na₂O) / NaOH | 1.0 |
| (SiO₂ + Na₂O + NaOH +water) / metakoline | 1.33 |
| Si/Al (silicium/aluminium) | 1/1 |

The final solid content of this mineral binder formulation was 68% (w/w).
Formulation B

| **Component** | **Weight ratio** |
|---|---|
| SiO₂/K₂O | 1.9 |
| (SiO₂ + K₂O) / KOH | 0.66 |
| (SiO₂ + K₂O + KOH +water) / fly ash | 1.0 |
| Si/Al (silicium/aluminium) | 2/1 |

The final solid content of this mineral binder formulation was 75% (w/w).
Formulation C

| **Component** | **Weight ratio** |
|---|---|
| SiO₂/Li₂O | 2.5 |
| (SiO₂ + Li₂O) / KOH | 1.33 |
| (SiO₂ + K₂O + KOH +water) / silica fume | 0.66 |
| Si/Al (silicium/aluminium) | 5/1 |

The final solid content of this mineral binder formulation was 60 % (w/w).

### Example 2: Preparation of wood based panels

### 2.1 Particleboards

For the production of particle boards, particles of 0.3-2 mm length were spray-resinated with formulation A described in Example 1 in a mixing unit. The so resinated particles were scattered on a rotating conveyer to form a first outer layer of the resinated strands. In the same way, particles of 3-10 mm length were spray-resinated with formulation A described in Example 1 and scattered on the first outer layer to form a core layer. Finally, a second outer layer was formed by scattering particles of 0.3-2 mm length, which were spray-resinated with formulation A described in Example 1, on the core layer. The three layers were compacted down to a thickness of 20 mm in a hot press at a temperature of 150 °C. The resulting flat pressed particle panel was subsequently cut to obtain particle boards of a size of 2050 mm x 925 mm. The particleboards were collected und stored for additional curing in a hot chamber at 80 °C for 3 hours.

The final amount of the mineral binder in these particleboards was 30 % based on dry mass of the wooden materials. The particleboards had a density of 680 kg/m³, which is comparable to particle boards that have been produced using conventional binder materials.

### 2.2 OSB boards

For the production of oriented strand boards, strands of 20 to 70 mm length, 3 to 10 mm width and 0.3 to 0.6 mm thickness were spray-resinated with formulation B described in Example 1 in a mixing unit. The so resinated strands were scattered on a rotating conveyer. The OSB panel consisted of 4 layers. To produce a first outer layer, the resinated strands were scattered in longitudinal direction. Thereafter, a first middle layer was formed by scattering the resinated strands in transverse direction onto the first outer layer, followed by the formation of a second middle layer with the resinated strands in transverse direction. Finally, a second outer layer was formed by scattering resinated strands again in longitudinal direction onto the previously formed second middle layer. The four layers were compacted together down to a thickness of 18 mm in a hot press at a temperature of 170 °C. The resulting flat pressed OSB panel was subsequently cut to obtain OSB boards with a size of 2500 mm x 1250 mm. The OSB boards were collected and stored for additional curing in a hot chamber at 80 °C for 5 hours.

The final amount of the mineral binder in these particle boards was 20 % based on dry mass of the wooden strands. The OSB boards had a density of 650 kg/m³, which is comparable to OSB boards that have been produced using conventional binder materials.

### 2.3 Fiber boards

For the production of medium density fiber boards (MDF), strands of about 20 mm length were further cooked to produce wood fibers. The wood fibers were spray- resinated with formulation C described in Example 1 in a mixing unit. The so resinated wood fibers were scattered on an endless belt conveyer to form two layers of the resinated fibers. These layers were compacted together down to a thickness of 10 mm in a hot press at a press temperature of 220 °C. The resulting flat pressed particle panel was subsequently cut to obtain MDF boards of a size of 2050 mm x 925 mm. Due to the high temperature in the hot press, it was not necessary to perform a further curing step.

The final amount of the mineral binder in these MDF boards was 25 % based on dry mass of the wooden materials. The MDF boards had a density of 700 kg/m³, which is comparable to MDF boards that have been produced using conventional binder materials.

### Example 3: Manufacturing of particleboards in a batch process

A three layered particleboard having the dimensions of 600 mm x 400 mm x 19 mm has been made using geoplymer as the binder. In the particleboards produced, each of the face layers accounted to be 3 mm and accordingly, the core layer was 13 mm in thickness. Three panel variations (Panel A, Panel B, Panel C) were produced at a press temperature of 130 °C. The press factor was calculated to be 20 s/mm.
Further details regarding the panel's variation are shown in table below.

| | **Density (kg/m³)** | **Resin content (%)** | **Alkaline solution (grams)** | **Metakaolin (grams)** |
|---|---|---|---|---|
| **Panel A** | 650 | 30 | 691 | 518 |
| **Panel B** | 650 | 50 | 984 | 737 |
| **Panel C** | 900 | 40 | 983 | 887 |

For panel A, 691 grams of alkaline solution consisting of water glass (346 grams), potassium hydroxide (152 grams), and water (193 grams) were mixed with 518 grams of Metakaoline. For panel B and C, the same trend mentioned in the table is used. The mixing process has been done using a conventional mixer. The time for resin spraying is depended on the air pressure used and the amount of resin used for the face layers and core layer. In the present case, the spraying time was between 5 - 10 minutes for each layer.

## Claims

1. A process for the manufacturing of a wood-based panel comprising the following steps:
a) resinating wooden particles with a mineral binder composition by means of spraying,
b) providing at least one layer of the resinated wooden particles,
c) compacting the scattered particles/mineral binder mat in a hot press at an press temperature in the range of 81 to 220 °C,
d) optionally hardening/curing of the flat pressed wooden particles/mineral binder composite panels by means of heat,
e) further optionally post curing and stabilization of the wooden particle/mineral binder composite boards,
wherein the mineral binder composition utilized in step a) comprises
at least one water glass material selected from Sodium silicate (Na₂SiO₃) potassium silicate (K₂SiO₃), lithium silicate (Li₂SiO₃) and/or a mixture thereof,
at least one chemical base, preferably selected from sodium hydroxide (NaOH) and potassium hydroxide (KOH) and/or a mixture thereof,
water or distillated water,
at last one aluminosilicate powder having aluminum and silicium as the major components, preferably selected from slag micro-powder, fly ash, paper sludge ash, silica fume, kaolin based minerals (e.g. metakaolin), calcium silicate minerals, calcium aluminate based minerals, plasticized and crushed clay, oil shale ash and/or a mixture of these materials;
wherein the wooden particles are resinated with the mineral binder composition by means of spraying,
and wherein
• the final solid content of the mineral binder composition is varied in the range of 40-85 % (w/w); and
• the weight ratio of the mineral binder composition is in the range of 10 to 30 % based on the dry mass of the wooden materials.

2. The process according to claim 1, wherein the cohesion of wooden particles is achieved by means of the mineral binder composition.

3. The process according to claim 1 or 2, wherein the wooden particles which form the matrix material, are capable of crushing and are, e.g. selected from lamella, veneers, strands, particles, powders and fibers.

4. The process according to any one of claims 1-3, wherein the mineral binder is used in combination with at least one other material selected from conventional binders, such us urea formaldehyde, phenol formaldehyde, melamine formaldehyde, melamine urea formaldehyde, methylene diphenyl diisocyanate (MDI) or polymeric MDI or a tannin based material and/or an additive selected from organic and/or inorganic materials like polyvinyl alcohol, polyethylene glycol, polyacrylic acid, sodium polyacrylic acid, polyvinyl butyral, polystyrene-co-maleic anhydride, dextran, gelatin and carboxy methyl cellulose, water-based latex, ethyl ester silicate, silanes, epoxides, different types of water repellents and hardeners, different types of buffering materials and/or different types of lignin.

5. The process according to any one of claims 1-4, wherein the wood-based panel consists of at least one layer, preferably of two, three or more layers.

6. The process according to any one of claims 1-5, wherein the mineral binder is comprised in the whole wood-based panel, e.g. all layers of the wood-based panel,
or
wherein the mineral binder is comprised in at least one separate layer of the wood-based panel and wherein the at least one other material is comprised in at least one other layer.

7. The process according to any one of claims 1-6, wherein the wood-based panel is produced in a batch process or as an endless panel.

8. A wood-based panel obtainable by the process according to any one of claims 1 to 6.

9. The process according to any one of claims 1 to 6 or the wood-based panel according to claim 8, wherein said wood-based panel is a wooden fiber board, particle board or an oriented strand board (OSB), plywood or an engineered wood product e.g. laminated veneer lumber (LVL), cross-laminated timber (CLT), glue laminated timber (GLT), preferably an oriented strand board (OSB), medium density fiberboard (MDF) or high density fiberboard (HDF).

10. Use of a wood-based panel according to claim 8 or 9 for the manufacturing of construction materials for use in the construction, automotive and/or furniture industry.

## Patentansprüche

1. Verfahren zur Herstellung einer Holzwerkstoffplatte umfassend die folgenden Schritte:
a) Beharzen von Holzpartikeln mit einer mineralischen Bindemittelzusammensetzung durch Sprühen,
b) Bereitstellen mindestens einer Schicht der beharzten Holzpartikel,
c) Verdichten der gestreuten Partikel / mineralischen Bindemittelmatte in einer Heißpresse bei einer Presstemperatur im Bereich von 81 bis 220 °C,
d) gegebenenfalls Verfestigen / Aushärten der flach gepressten Verbundplatten aus Holzpartikeln / mineralischem Bindemittel mittels Hitze,
e) gegebenenfalls Nachhärtung und Stabilisierung der Verbundplatten aus Holzpartikeln / mineralischem Bindemittel,
wobei die in Schritt a) verwendete mineralische Bindemittelzusammensetzung umfasst
mindestens ein Wasserglasmaterial, ausgewählt aus Natriumsilicat (Na₂SiO₃), Kaliumsilikat (K₂SiO₃), Lithiumsilikat (Li₂SiO₃) und / oder ein Gemisch davon,
mindestens eine chemische Base, vorzugsweise ausgewählt aus Natriumhydroxid (NaOH) und Kaliumhydroxid (KOH) und / oder einer Mischung davon,
Wasser oder destilliertes Wasser,
mindestens ein Aluminiumsilikatpulver mit Aluminium und Silicium als Hauptkomponenten, vorzugsweise ausgewählt aus Schlackenmikropulver, Flugasche, Papierschlammasche, Silicastaub, Kaolin-basierten Mineralien (z. B. Metakaolin), Calciumsilikatmineralien, auf Calciumaluminat basierenden Mineralien, plastifiziertem und zerkleinertem Ton, Ölschieferasche und / oder einer Mischung dieser Materialien;
wobei die Holzpartikel mit der mineralischen Bindemittelzusammensetzung durch Sprühen beharzt werden,
und wobei
• der finale Feststoffgehalt der mineralischen Bindemittelzusammensetzung im Bereich von 40-85% (w w) variiert wird; und
• das Gewichtsverhältnis der mineralischen Bindemittelzusammensetzung im Bereich von 10 bis 30%, bezogen auf die Trockenmasse der Holzwerkstoffe, liegt.

2. Verfahren nach Anspruch 1, **dadurch gekennzeichnet, dass** die Kohäsion von Holzpartikeln mittels der mineralischen Bindemittelzusammensetzung erfolgt.

3. Verfahren nach Anspruch 1 oder 2, **dadurch gekennzeichnet, dass** die Holzpartikel, die das Matrixmaterial bilden, zerkleinert werden können und z.B. ausgewählt sind aus Lamellen, Furnieren, Strängen, Spänen, Pulvern und Fasern.

4. Verfahren nach einem der Ansprüche 1 bis 3, wobei das mineralische Bindemittel in Kombination mit mindestens einem anderen Material, ausgewählt aus herkömmlichen Bindemitteln, wie Harnstoff-Formaldehyd, Phenol-Formaldehyd, Melamin-Formaldehyd, Melamin-Harnstoff-Formaldehyd, Methyldiphenyldiisocyanat (MDI) oder polymerem MDI oder einem auf Tannin basierenden Material und / oder einem Additiv ausgewählt aus organischen und/oder anorganischen Materialien wie Polyvinylalkohol, Polyethylenglykol, Polyacrylsäure, Natriumpolyacrylsäure, Polyvinylbutyral, Polystyrol-co-Maleinsäureanhydrid, Dextran, Gelatine und Carboxymethylcellulose, Latex auf Wasserbasis, Ethylestersilikat, Silanen, Epoxiden, verschiedenen Arten von Wasserabweisungsmitteln und Härtern, verschiedenen Arten von Puffermaterialien und/oder verschiedene Arten von Lignin verwendet wird.

5. Verfahren nach einem der Ansprüche 1 bis 4, **dadurch gekennzeichnet, dass** die Holzwerkstoffplatte aus mindestens einer Schicht, vorzugsweise aus zwei, drei oder mehr Schichten besteht.

6. Verfahren nach einem der Ansprüche 1 bis 5, wobei das mineralische Bindemittel in der gesamten Holzplatte, z.B. allen Schichten der Holzplatte, enthalten ist,
oder
wobei das mineralische Bindemittel in mindestens einer separaten Schicht der Holzwerkstoffplatte enthalten ist und wobei das mindestens eine andere Material in mindestens einer anderen Schicht enthalten ist.

7. Verfahren nach einem der Ansprüche 1 bis 6, **dadurch gekennzeichnet, dass** die Holzwerkstoffplatte in einem Batch-Verfahren oder als Endlosplatte hergestellt wird.

8. Holzwerkstoffplatte, erhältlich nach dem Verfahren nach einem der Ansprüche 1 bis 6.

9. Verfahren nach einem der Ansprüche 1 bis 6 oder der Holzwerkstoffplatte nach Anspruch 8, wobei die Holzwerkstoffplatte eine Holzfaserplatte, eine Spanplatte oder eine orientierte Strangplatte (OSB), Sperrholz oder ein Holzprodukt, z.B. laminiertes Furnierholz (LVL), kreuzlaminiertes Bauholz (CLT), Leimholz (GLT), vorzugsweise eine orientierte Strangplatte (OSB), mitteldichte Faserplatte (MDF) oder hochdichte Faserplatte (HDF) ist.

10. Verwendung einer Holzwerkstoff platte nach Anspruch 8 oder 9 zur Herstellung von Konstruktionsmaterialien zur Verwendung in der Bau-, Automobil- und / oder Möbelindustrie.

## Revendications

1. Procédé de fabrication d'un panneau à base de bois comprenant les étapes suivantes :
a) l'addition de résine à des particules de bois en utilisant une composition de liant minéral, par pulvérisation,
b) la formation d'au moins une couche des particules de bois additionnées de résine,
c) le compactage du mat de particules dispersées/liant minéral dans une presse chaude à une température de presse de 81 à 220 °C,
d) optionnellement le durcissement/la cuisson des panneaux composites pressés à plat des particules de bois/liant minéral au moyen de chaleur,
e) optionnellement en outre le post-durcissement et la stabilisation des panneaux composites de particules de bois/liant minéral,
dans lequel la composition de liant minéral utilisée à l'étape a) comprend :
au moins un matériau de type verre soluble sélectionné parmi le silicate de sodium (Na₂SiO₃) le silicate de potassium (K₂SiO₃), le silicate de lithium (Li₂SiO₃) et/ou un mélange de ceux-ci,
au moins une base chimique, préférablement sélectionnée parmi l'hydroxyde de sodium (NaOH) et l'hydroxyde de potassium (KOH) et/ou un mélange de ceux-ci,
de l'eau ou de l'eau distillée,
au moins une poudre d'aluminosilicate ayant comme constituants principaux l'aluminium et le silicium, préférablement sélectionnée parmi la micro-poudre de scories, les cendres volantes, les cendres de boues de papier, la fumée de silice, les minéraux à base de kaolin (par exemple le métakaolin), les minéraux à base de silicate de calcium, les minéraux à base d'aluminate de calcium, l'argile plastifiée et broyée, les cendres de schistes pétrolifères et/ou un mélange de ces matériaux ;
dans lequel les particules de bois sont additionnées de résine en utilisant la composition de liant minéral par pulvérisation,
et dans lequel
• la teneur finale en solides de la composition de liant minéral varie dans une plage de 40-85 % (p/p) ; et
• le rapport pondéral de la composition de liant minéral est de 10 à 30 % relativement à la masse sèche des matériaux à base de bois.

2. Procédé selon la revendication 1, dans lequel la cohésion des particules de bois est obtenue au moyen de la composition de liant minéral.

3. Procédé selon la revendication 1 ou 2, dans lequel les particules de bois qui forment le matériau de matrice sont capables d'être écrasées et sont sélectionnées, par exemple, parmi les lamelles, les placages, les brins, les particules, les poudres et les fibres.

4. Procédé selon l'une quelconque des revendications 1 à 3, dans lequel le liant minéral est utilisé en combinaison avec au moins un autre matériau sélectionné parmi des liants conventionnels, tels que les composés urée-formaldéhyde, phénol-formaldéhyde, mélamine-formaldéhyde, mélamine-urée-formaldéhyde, le diisocyanate de méthylène diphényle (MDI) ou le MDI polymère, ou un matériau à base de tanin et/ou un additif sélectionné parmi des matériaux organiques et/ou inorganiques tels que l'alcool polyvinylique, le polyéthylène glycol, l'acide polyacrylique, le sel sodique d'acide polyacrylique, le polyvinylbutyral, le polystyrène-co-anhydride maléique, le dextrane, la gélatine et la carboxyméthylcellulose, un latex à base d'eau, un silicate d'ester éthylique, des silanes, des époxydes, différents types de produits hydrofuges et de durcisseurs, différents types de matériaux tampons et/ou différents types de lignine.

5. Procédé selon l'une quelconque des revendications 1 à 4, dans lequel le panneau à base de bois se compose d'au moins une couche, de préférence de deux ou trois couches ou plus.

6. Procédé selon l'une quelconque des revendications 1 à 5, dans lequel le liant minéral est présent dans l'ensemble du panneau à base de bois, par exemple toutes les couches du panneau à base de bois,
ou
dans lequel le liant minéral est présent dans au moins une couche distincte du panneau à base de bois et dans lequel ledit au moins un autre matériau est présent dans au moins une autre couche.

7. Procédé selon l'une quelconque des revendications 1 à 6, dans lequel le panneau à base de bois est produit dans un procédé en discontinu ou sous la forme d'un panneau sans fin.

8. Panneau à base de bois pouvant être obtenu par le procédé selon l'une quelconque des revendications 1 à 6.

9. Procédé selon l'une quelconque des revendications 1 à 6 ou panneau à base de bois selon la revendication 8, dans lequel ledit panneau à base de bois est un panneau de fibres de bois, un panneau de particules ou un panneau de copeaux orienté (OSB), un contreplaqué ou un produit à base de bois d'ingénierie, par exemple un bois lamellé de placage (LVL), un stratifié à couches croisées (CLT), un stratifié collé (GLT), préférablement un panneau de copeaux orienté (OSB), un panneau de fibres agglomérées de moyenne densité (MDF) ou un panneau de fibres agglomérées de haute densité (HDF).

10. Utilisation d'un panneau à base de bois selon la revendication 8 ou 9 pour la fabrication de matériaux de construction destinés à une utilisation dans l'industrie de la construction, de l'automobile et/ou de l'ameublement.
